# NEW EUROPEAN PATENT SPECIFICATION

(11) **EP 1 795 872 B2**
(45) Date of publication and mention of the opposition decision: **12.06.2013**
(45) Mention of the grant of the patent: 11.06.2008
(21) Application number: 06024290.6
(22) Date of filing: 23.11.2006
(51) Int. Cl.: G01D 5/34

(54) **Photoelectric rotary encoder**
Fotoelektrischer Drehkodierer
Codeur rotatif photoélectrique

(30) Priority: 06.12.2005 JP 2005352362
(43) Date of publication of application: 13.06.2007
(73) Proprietor: Mitutoyo Corporation, Kawasaki-shi, Kanagawa-ken 213-0012 (JP)
(72) Inventor: Yaku, Toru, Kawasaki-shi Kanagawa 213-0012 (JP); Kiriyama, Tetsuro, Kawasaki-shi Kanagawa 213-0012 (JP); Kawada, Hiroaki, Kawasaki-shi Kanagawa 213-0012 (JP)
(74) Representative: Lang, Christian

(56) References cited:
- EP-A1- 0 536 655
- EP-A1- 0 672 891
- EP-A1- 0 947 833
- JP-A- 7 218 221
- US-A1- 2004 173 737

## Description

The present invention relates to a photoelectric rotary encoder having an arc-shaped optical grating disposed on a side surface of a rotating body. In particular, the invention relates to a photoelectric rotary encoder which is suitably employed in roundness measuring apparatus, wire bonders, built-in motors, and the like. The photoelectric rotary encoder can detect, using a simple detection system, even a binary optical grating which is formed on the side surface of a cylinder and is characterized in that only lightness difference is present in the grating.

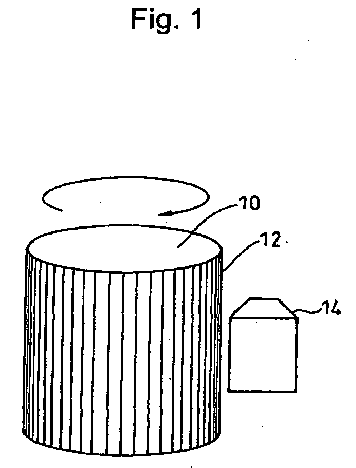

A photoelectric rotary encoder shown in Fig. 1 is known. Specifically, an arc-shaped optical grating 12 (also referred to as an arc scale) is formed on the side surface of a rotating body 10 such as a rotation shaft or a rotation table, and the grating 12 is detected by a detection unit 14 opposed to the grating 12, whereby the rotational motion and/or velocity of the rotating body 10 are measured.

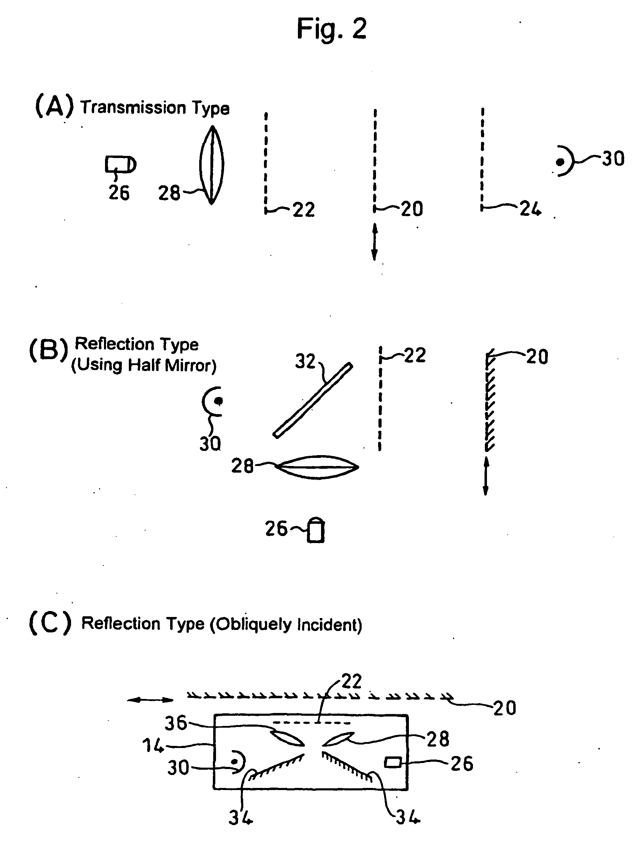

Meanwhile, a so-called three-grating principle described in, for example, Patent Document 1 (Japanese Patent Laid-Open Publication No. Sho 63-33604, see Figs. 1 and 2 thereof) is utilized in linear encoders. In the three-grating principle, three optical gratings serve as a spatial filter. For a transmission type shown in Fig. 2(A), these three optical gratings are a second grating 20 serving as a main scale and first and third gratings 22 and 24 each serving as an index scale. For reflection types shown in Figs. 2(B) and 2(C), light passes through a first grating 22 (also serving as a third grating) twice. Therefore, in the three-grating principle, an approximately sinusoidal signal can be detected, and thus interpolation can be performed with high precision. However, it is necessary to form the optical gratings into a planar shape. In Figs. 2(A) to 2(C), reference numeral 26 represents a light source, and reference numeral 28 represents an optical system composed of, for example, a collimator lens.

Reference numeral 30 represents a light receiving element, and reference numeral 32 represents a half mirror employed in one reflection type. Reference numeral 34 represents a mirror employed in another reflection type, and reference numeral 36 represents a condensing lens employed in the reflection type.

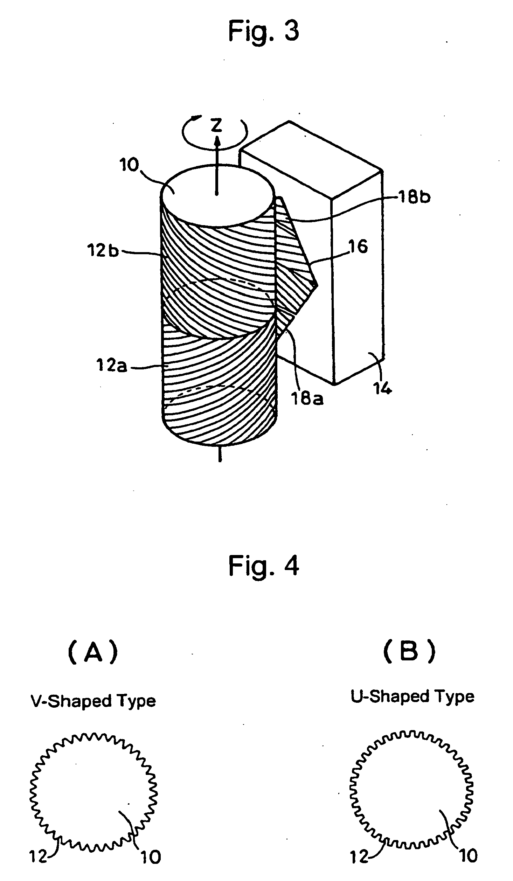

When an optical grating 12 on the side surface of a rotating body 10 is detected by means of the three-grating principle without modification, complicated optical gratings shown in Fig. 3 are required, as described in Patent Document 2 (Japanese Patent Laid-Open Publication No. Hei 7-218221, see Figs. 1 and 2 thereof). In Fig. 3, reference numerals 12a and 12b represent second gratings each serving as a main scale, and reference numerals 16, 18a, and 18b represent a first grating and third gratings, respectively, each serving as an index scale.

As described in Patent document 3 (Japanese Patent Laid-Open Publication No. 2003-149006, see Fig. 1 thereof), a detection method has been proposed in which an optical grating 12 on the side surface of a rotating body 10 is configured to have V-shaped slits or U-shaped slits as shown in sectional views of in Figs. 4(A) and 4(B), respectively, to thereby enhance contrast.

Further, Patent Document 4 (Japanese Patent Laid-Open Publication No. Hei 10-82611) discloses a fact that the Scheimpflug condition is utilized to project an image onto a wafer through a side gap in a reticle optical system.

However, according to any of the methods of Patent Documents 2 and 3, the detection is affected by fluctuations of the gap between an arc scale and a detection unit. In addition to this, a binary optical grating, which is characterized in that only lightness difference is present in the grating, cannot be employed. Therefore, a three-dimensional complicated optical grating must be prepared, thereby causing a problem of increasing manufacturing cost.

Moreover, no consideration has been given to the use of the Scheimpflug condition described in Patent Document 4 in a photoelectric encoder employing a telecentric optical system.

The present invention has been made in order to solve the above conventional problems. It is an object of the invention to provide a photoelectric rotary encoder which can detect, using a simple detection system, even a binary optical grating formed on the side surface of a rotating body, and in which cost reduction can be achieved.

The object is achieved by the invention defined in claim 1; embodiments of the invention are defined in the dependent claims.

One aspect relates to a photoelectric rotary encoder having an arc-shaped optical grating axially disposed on a cylindrical surface of a rotating body. The photoelectric rotary encoder is characterized in that a binary optical grating is employed as the arc-slaped optical grating, and that the binary optical grating is detected by means of a combination of a light receiving element and an object-side telecentric optical system provided with a lens at least on an object side of a pin hole, thereby solving the aforementioned problems.

According to another aspect, the telecentric optical system is a both-side telecentric optical system in which lenses are provided on the object side of the pin hole and a light receiving element side of the pin hole, respectively.

According to still another aspect, light from a light source is incident on the optical grating through a half mirror.

According to yet another aspect, light from a light source is obliquely incident on the optical grating.

According to another aspect, light from a converging light source is incident on the optical grating.

According to still another aspect, a condensing lens constituting the converging light source has spherical aberration.

According to yet another aspect, the rotating body, the telecentric optical system, and the light receiving element are arranged such that an object plane on the side surface of the rotating body, a center plane of the telecentric optical system, and a light receiving plane of the light receiving element intersect along a single line to satisfy the Scheimpflug relationship.

The optical grating is detected by means of a combination of the light receiving element and the object-side telecentric optical system having a large depth of focus on the object side. Therefore, even when the optical grating on the side surface of a cylinder is a binary optical grating which can be easily manufactured, the optical grating can be detected, and thus cost reduction can be achieved.

In particular, by employing a both-side telecentric optical system, the mounting tolerance of the light receiving element can be increased.

Furthermore, a reflection type detection unit can be configured by employing a half mirror.

Meanwhile, light from the light source may by obliquely incident on the optical grating. In this case, the optical axis of a light source system and the optical axis on a light receiving side are disposed so as to satisfy a regular reflection relationship therebetween on the surface of an arc scale. In this manner, the half mirror can be omitted to improve the utilization efficiency of light.

Furthermore, the utilization efficiency of light can be improved by employing a converging light source.

In particular, when the condensing lens constituting the converging light source has spherical aberration, parallel beams of light can be incident on the entire detection range of the light receiving optical system.

Moreover, by employing the Scheimpflug principle described in Patent Document 4, image blurring due to the oblique optical axis can be eliminated, whereby good signals can be obtained.

The preferred embodiments will be described with reference to the drawings, wherein like elements have been denoted throughout the figures with like reference numerals, and wherein;
Fig. 1 is a perspective view illustrating the basic configuration of a rotary encoder which is the subject of the present invention and has an arc scale disposed on the side surface of a rotating body;
Fig. 2 is a set of views illustrating the basic configuration of linear encoders which employ a three-grating principle and are described in Patent Document 1;
Fig. 3 is a perspective view illustrating an optical grating described in Patent Document 2.
Fig. 4 is a set of cross-sectional views illustrating optical gratings described in Patent Document 3;
Fig. 5 is a cross-sectional view illustrating the configuration of a first example;
Fig. 6 is a cross-sectional view illustrating the configuration of a second example;
Fig. 7 is a cross-sectional view illustrating the configuration of a third example;
Fig. 8 is a cross-sectional view for describing problems in the third example;
Fig. 9 is a cross-sectional view illustrating the configuration of a main portion of a fourth example;
Fig. 10 is an optical path diagram illustrating the principle of the fourth example;
Fig. 11 is a cross-sectional view illustrating the configuration of a main portion of a fifth example;
Fig. 12 is a front view illustrating the configuration of a sixth example;
Fig. 13 is a front view illustrating the configuration of a first embodiment of the present invention;
Fig. 14 is a front view illustrating the configuration of an second embodiment of the present invention; and
Fig. 15 is a cross-sectional view illustrating the configuration of a third embodiment of the present invention.

Hereinafter, embodiments of the present invention will be described in detail with reference to the drawings.

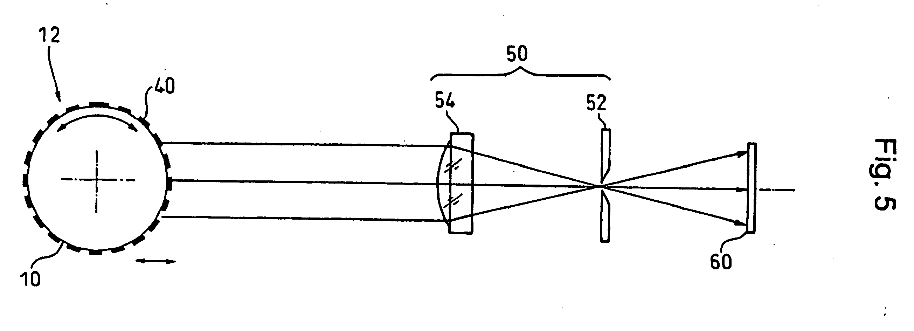

As shown in Fig. 5, a binary optical grating 40 is employed as an optical grating of an arc scale 12. The binary optical grating 40 can be detected by means of a combination of an object-side telecentric optical system 50 and a light receiving element 60. The telecentric optical system 50 has a lens 54 at least on the object side of a pin hole 52. In Fig. 5, the light receiving element 60 is a light receiving array integrally formed by combining a third grating and a light receiving element.

In this example, the depth of focus is large on the object (the arc scale 12) side of the object-side telecentric system 50 (the left side in Fig. 5). Therefore, the pattern of the optical grating 40 on the arc scale 12 can be detected by the light receiving element 60 even when the distance of the arc scale 12 from the lens 54 is changed gradually.

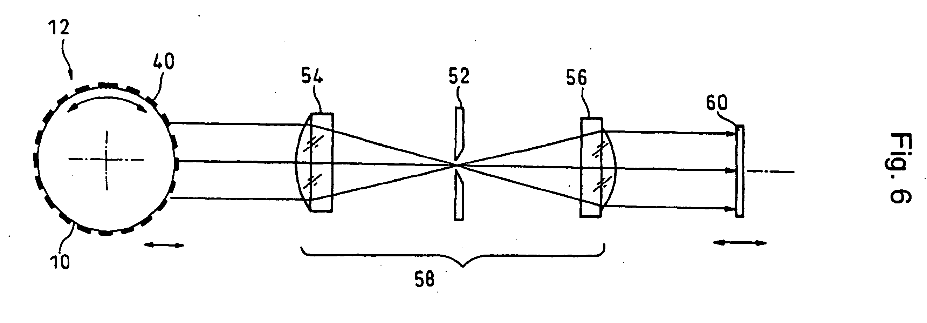

With reference to Fig. 6, a description will now be given of a second example.

This example has the same configuration as in the first example except that a both-side telecentric optical system 58 is provided in place of the object-side telecentric optical system 50. The both-side telecentric optical system 58 is provided with a lens 54 (also referred to as a first lens) on the object side of a pin hole 52 and a second lens 56 on the light receiving element side of the pin hole 52. The detection is achieved by means of a combination of the both-side telecentric optical system 58 and the light receiving element 60. The rest of the configuration is the same as that of the first embodiment, and the description is omitted.

According to this example, the mounting tolerance can be increased not only on the arc scale 12 side but also on the light receiving element 60 side.

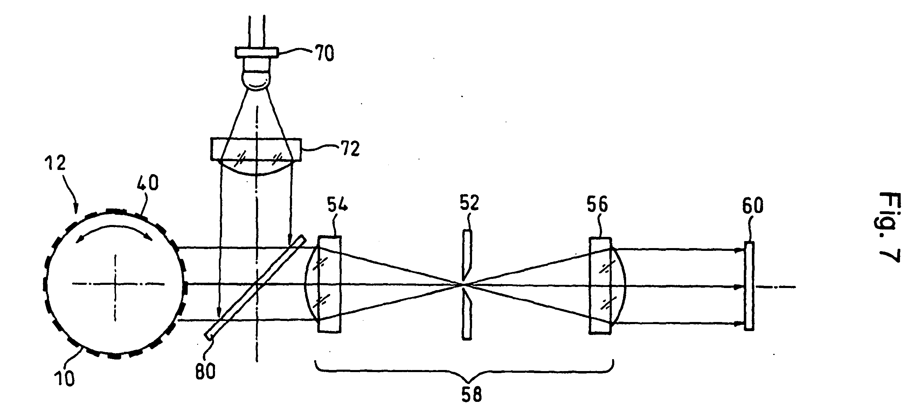

With reference to Fig. 7, a detailed description will now be given of a third example of the present invention.

This example has the same configuration as in the second embodiment except that a half mirror 80 is inserted between the arc scale 12 and the first lens 54. In this instance, light from a light source 70 is formed into collimated light through a condensing lens 72 and is then projected onto the surface of the arc scale 12 using the half mirror 80. The rest of the configuration is the same as that of the second embodiment, and the description is omitted.

According to this example, a reflection type detection unit can be constituted by projecting light through the half mirror 80.

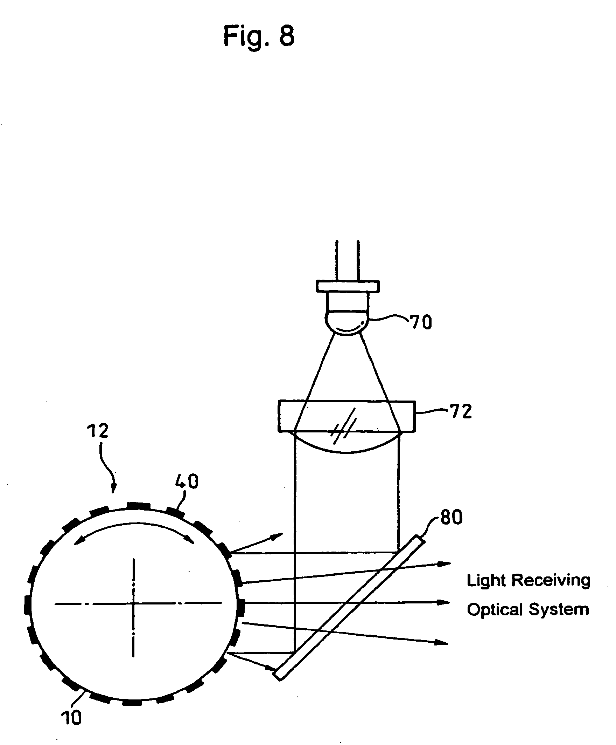

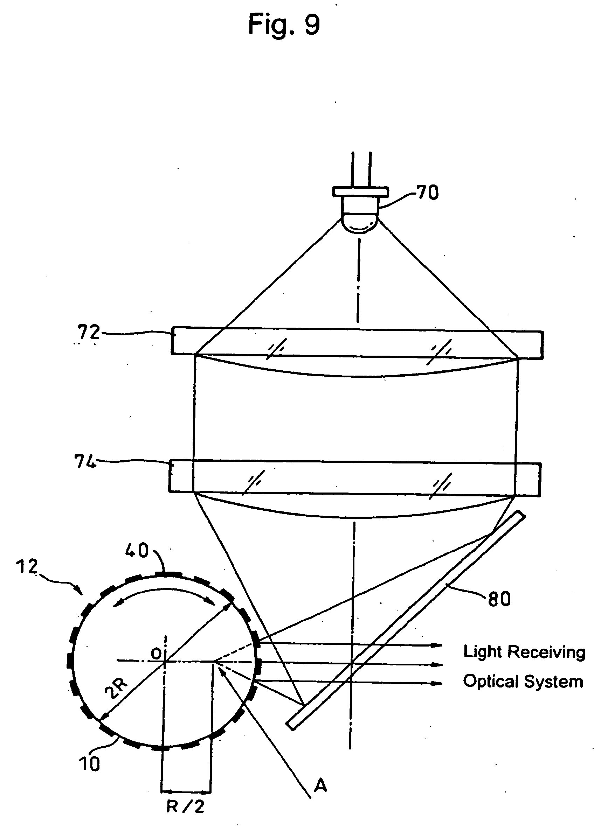

Here, when collimated light is projected onto the arc scale 12 as in the third example, the light diffuses on the arc surface as shown in Fig. 8, and thus the amount of light returning to the optical system on a light receiving side decreases. Therefore, in a fourth example, a second condensing lens 74 is provided in addition to the condensing lens 72 (also referred to as a first condensing lens) for converting the light from the light source 70 into collimated light, as shown in Fig. 9. Hence, incident light is formed as converging light in which diffusion on the arc surface is taken into consideration. Furthermore, a light converging point A of the projection light is adjusted to coincide with the midpoint between the surface of the arc and the center O of the arc, whereby the returning light from the arc scale 12 is converted into collimated light.

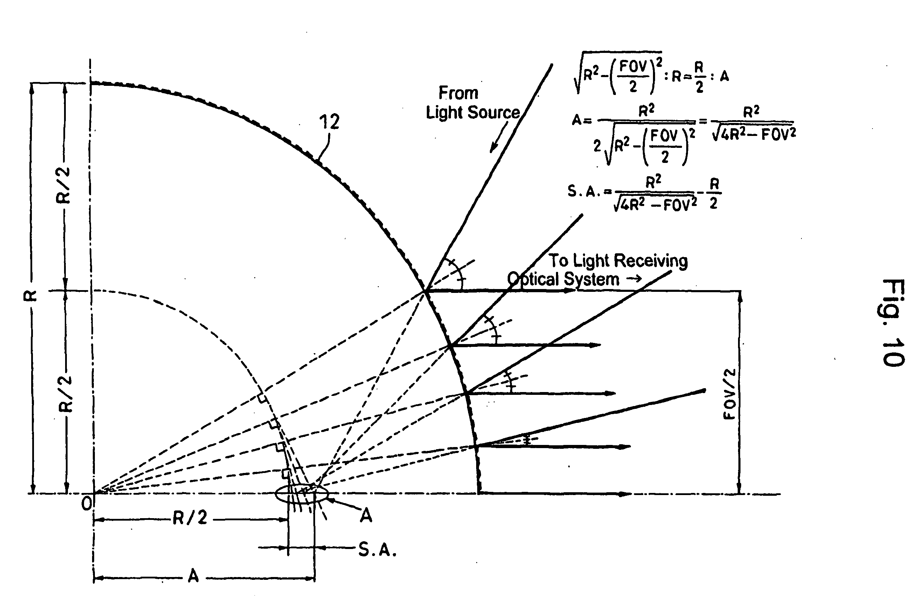

Here, when the projection optical system has spherical aberration S. A., the collimated light can be projected onto the entire detection range (FOV: Field of View) of the reception optical system as shown in Fig. 10. In Fig. 10, symbol R represents the radius of the arc scale 12. In this instance, the light converging point A is displaced from R/2 by the spherical aberration S. A., and symbol A represents the distance of the light converging point A from the center O of the arc.

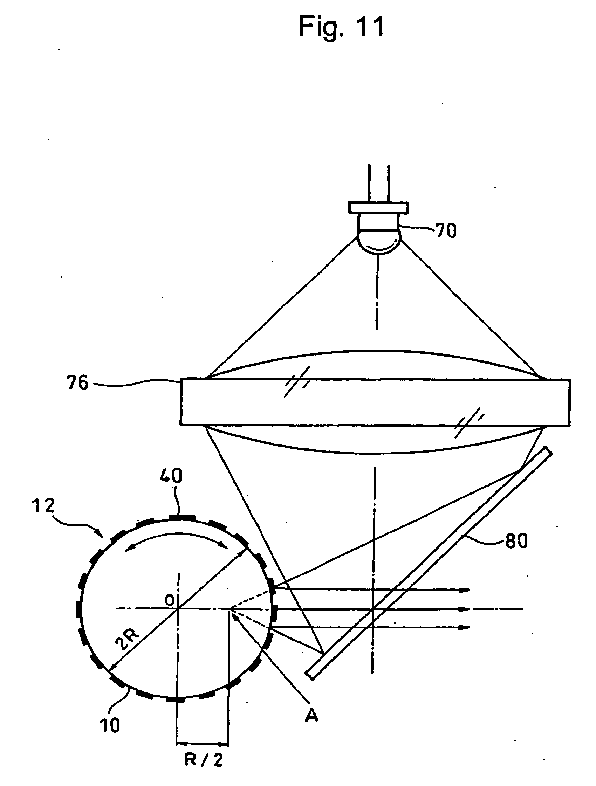

Moreover, in a fifth example shown in Fig. 11, the first and second condensing lenses 72 and 74 in the fourth example are integrated to form a single condensing lens 76, whereby the projection light can be condensed through the condensing lens 76.

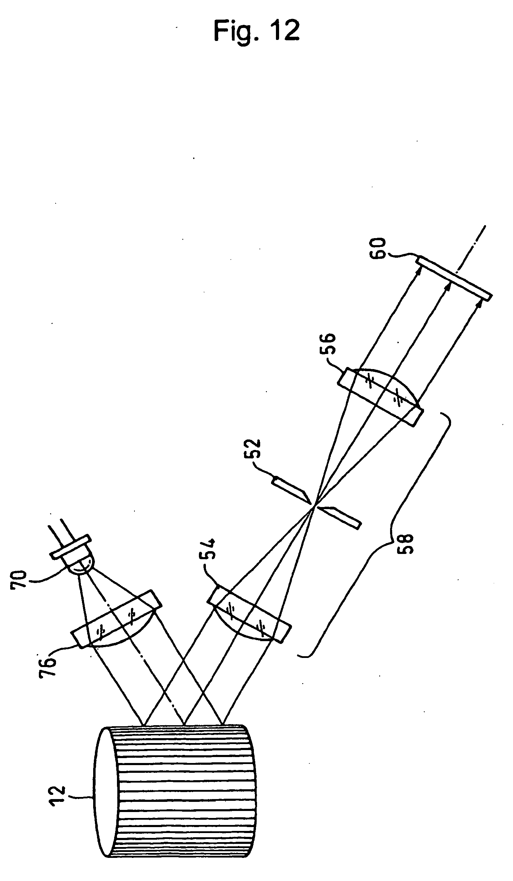

With reference to Fig. 12, a detailed description will now be given of a sixth example.

In this example, light from the light source 70 is obliquely incident on the arc scale 12. In addition to this, the optical axis on the light source side and the optical axis on the light receiving side are disposed so as to satisfy a regular reflection relationship therebetween on the surface of the arc scale 12.

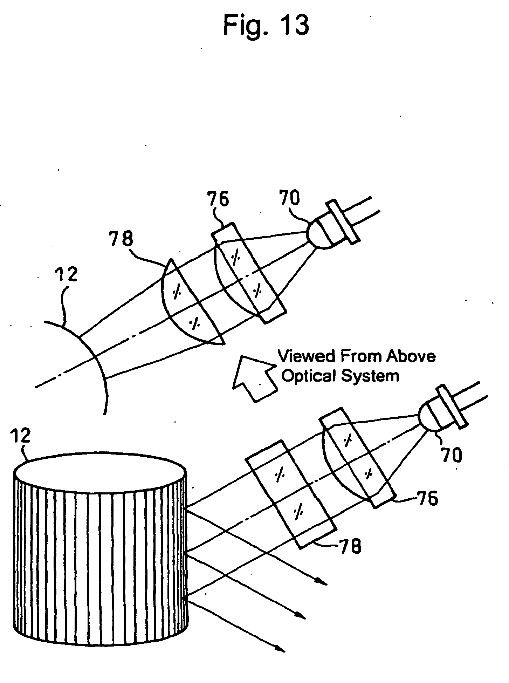

In a first embodiment shown in Fig. 13, a cylindrical lens 78 can be added to the condensing lens 76. The cylindrical lens 78 can form collimated light when the light is viewed in a state where the light is projected on a plane that contains an axis of the rotating body 10 of the arc scale 12 and an optical axis of the light source 70, and at the same time, the cylindrical lens 78 can converge light when the light is viewed in a state where the light is projected on a plane perpendicular to the axis of the rotating body 10.

According to this embodiment, the utilization efficiency of light is high since a half mirror is not employed.

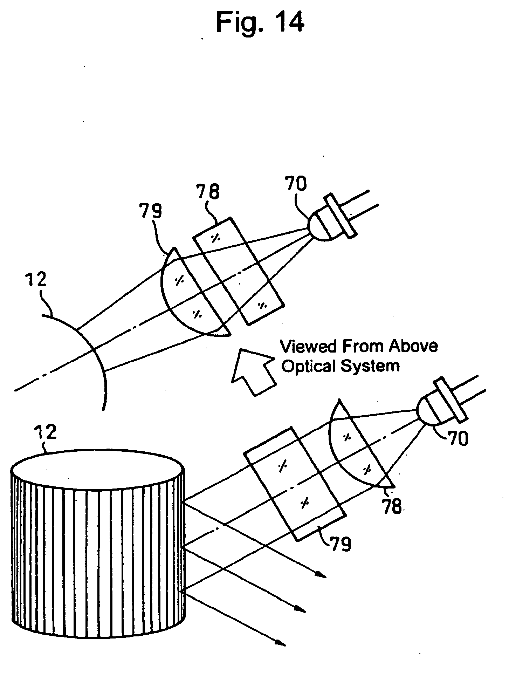

It should be appreciated that, as in a second embodiment shown in Fig. 14, two cylindrical lenses 78 and 79 can be employed as condensing lenses.

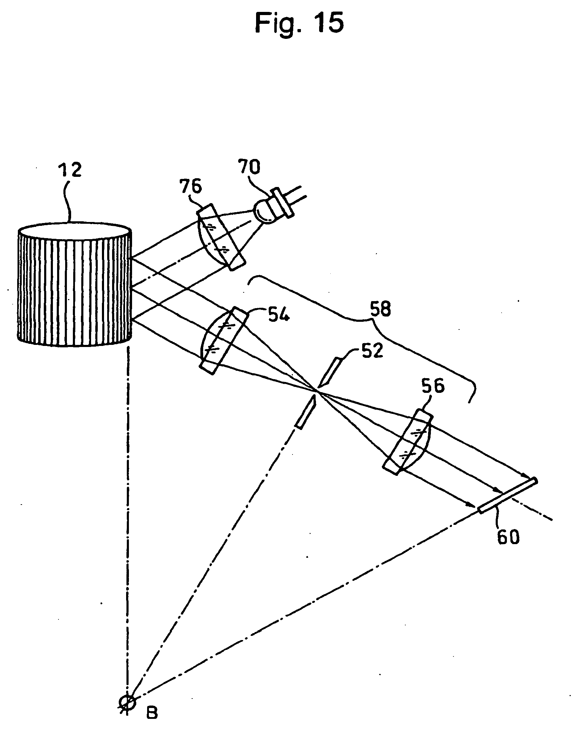

In the first and second embodiments, the light receiving optical system is arranged obliquely. In this case, although the depth of focus of the telecentric optical system 58 is large, image blurring occurs since the surface of the arc scale is observed from an oblique angle. Therefore, in a third embodiment shown in Fig. 15, the Scheimpflug principle is combined with the oblique arrangement of the light receiving optical system. In this instance, the Scheimpflug principle is satisfied when an object plane serving as a side surface of the arc scale 12, a center plane of the telecentric optical system (a pin hole plane in the both-side telecentric optical system 58 shown in Fig. 15), and a light receiving plane of the light receiving element 60 are arranged to comprise a single line B of intersection. In this manner, light from the light source 70 can be incident on the light receiving plane substantially in focus.

According to this embodiment, image blurring can be eliminated.

Meanwhile, the both-side telecentric optical system 58 employed in each of the above embodiments may be the object-side telecentric system 50. In this case, the center plane of the optical system for satisfying the Scheimpflug condition is not the pin hole plane but the principal plane of the lens 54.

Moreover, in each of the above embodiments, the light receiving array in which the light receiving element is integrated with the third grating is employed as the light receiving element. However, the light receiving element and the third grating can be separately provided instead.

## Claims

1. A photoelectrical rotary encoder having an arc-shaped optical grating (12) axially disposed on a cylindrical surface of a rotating body (10),
wherein a binary optical grating (40) is employed as the are-shaped optical grating (12), and
wherein the binary optical grating (40) is detected by means of a combination of a light receiving element (60) and an object-side telecentric optical system (50) provided with a lens (54) at least on an object (10) side of a pin hole (52),
**characterized in that**
light from a light source (70) is incident on the arc-shaped optical grating (40) through a half-mirror (80) or with oblique incidence, a condensing lens (72, 74, 76) is provided together with a cylindrical lens (78) so that collimated light is formed when the light is viewed in a state where the light is projected on a plane that contains an axis of the rotating body (10) of the arc-shaped optical grating (12) and an optical axis of the light source (70), the cylindrical lens (78) simultaneously converging light when the light is viewed in a state where the light is projected on a plane perpendicular to the axis of the rotating body.

2. The photoelectric rotary encoder according to claim 1, **characterized in that** the telecentric optical system is a both-side telecentric optical system (58) in which lenses (54, 56) are provided on the object (10) side of the pin hole (52) and a light receiving element (60) side of the pin hole (52), respectively.

3. The photoelectric rotary encoder according to claim 1, **characterized in that** the converging light has spherical aberration (S.A.)

4. The photoelectric rotary encoder according to claim 1, **characterized in that** an optical axis on a side of the light source (70) and an optical axis on a side of the light receiving element (60) are disposed so as to satisfy a regular reflection relationship therebetween on a surface of the arc-shaped optical grating (12).

5. The Photoelectric rotary encoder according to claim 1, **characterized in that** two cylindrical lenses (78, 79) are employed as the condensing lens (76).

6. The photoelectric rotary encoder according to any of claims 1 to 5, **characterized in that** the rotating body (10), the telecentric optical system (58), and the light receiving element (60) are arranged such that an object plane serving as the side surface of the rotating body (10), a center plane of the telecentric optical system (58), and a light receiving plane of the light receiving element (60) comprise a single line (B) of intersection to satisfy the Scheimpflug relationship.

## Patentansprüche

1. Fotoelektrischer Drehcodierer, welcher ein bogenförmiges optisches Gitter (12) hat, welches axial an einer zylindrischen Oberfläche eines Drehkörpers (10) angeordnet ist,
worin ein binäres optisches Gitter (40) als das bogenförmige Gitter (12) verwendet wird, und
worin das binäre optische Gitter (40) mittels einer Kombination eines Licht empfangenden Bauteils (60) und eines objektseitigen telezentrischen optischen Systems (50), welches mit einer Linse (54) zumindest auf einer Objektseite (10) eines Nadellochs (52) ausgestattet ist, erfasst wird,
**dadurch gekennzeichnet, dass**
Licht von einer Lichtquelle (70) auf das bogenförmige optische Gitter (40) durch einen Halbspiegel (80) oder mit schräger Inzidenz fällt,
eine Kondensorlinse (72, 74, 76) zusammen mit einer Zylinderlinse (78) so vorgesehen ist, dass kollimiertes Licht gebildet wird, wenn das Licht in einem Zustand gesehen wird, in dem das Licht auf eine Ebene projiziert wird, die eine Achse des Drehkörpers (10) des bogenförmigen Gitters (12) und eine optische Achse der Lichtquelle (70) enthält, wobei die Zylinderlinse zugleich Licht konvergiert, wenn das Licht in einem Zustand gesehen wird, in dem das Licht auf eine Ebene projiziert wird, die senkrecht zur Achse des Drehkörpers liegt.

2. Fotoelektrischer Drehcodierer nach Anspruch 1, **dadurch gekennzeichnet, dass** das telezentrische optische System ein beidseitiges telezentrisches optisches System (58) ist, in welchem Linsen (54, 56) auf der Objektseite (10) des Nadellochs (52) beziehungsweise einer Seite des Nadellochs (52) mit dem Licht empfangenden Element (60) bereitgestellt sind.

3. Fotoelektrischer Drehcodierer nach Anspruch 1, **dadurch gekennzeichnet, dass** das konvergierende Licht sphärische Aberration (S.A.) aufweist.

4. Fotoelektrischer Drehcodierer nach Anspruch 1, **dadurch gekennzeichnet, dass** eine optische Achse auf einer Seite der Lichtquelle (70) und eine optische Achse auf einer Seite des Licht empfangenden Elements (60) in der Weise angeordnet sind, dass dazwischen eine reguläre Reflektionsbeziehung auf einer Oberfläche des bogenförmigen, optischen Gitters (12) erfüllt ist.

5. Fotoelektrischer Drehcodierer nach Anspruch 1, **dadurch gekennzeichnet, dass** zwei Zylinderlinsen (78, 79) als Kondensorlinse (76) verwendet werden.

6. Fotoelektrischer Drehcodierer nach einem der Ansprüche 4 bis 5, **dadurch gekennzeichnet, dass** der Drehkörper (10), das telezentrische optische System (58) und das Licht empfangende Element (60) so angeordnet sind, dass eine Objektebene, welche als Seitenoberfläche des Drehkörpers (10) dient, eine Mittelebene des telezentrischen optischen Systems (58) und eine Licht empfangende Ebene des Licht empfangenden Elements (60) eine einzige Schnittlinie (B) umfassen, um die Scheimpflugbeziehung zu erfüllen.

## Revendications

1. Codeur photoélectrique rotatif, comprenant un réseau optique (12) en forme d'arc, disposé axialement sur une surface cylindrique d'un corps tournant (10),
dans lequel un réseau optique binaire (40) est utilisé en tant que réseau optique en forme d'arc (12), et
dans lequel le réseau optique binaire (40) est detecté au moyen d'une combinaison d'un élément photorécepteur (60) et d'un système optique télécentral (50) du côté objet, pourvu d'une lentille (54) au moins d'un côté objet (10) d'un trou d'épingle (52),
**caractérisé en ce que**
lumière, provenant d'une source de lumière (70), arrive sur le réseau optique en forme d'arc (40) par l'intermédiaire d'un demi-miroir (80) ou obliquement,
une lentille condensatrice (72, 74, 76) et prevue en combination avec une lentille cylindrique (78) de manière à former une lumière collimatée, si l'on considère la lumière dans un état dans lequel la lumière est projée sur un plan contenant un axe du corps tournant (10) du réseau optique en forme d'arc (12) et un axe optique de la source de lumière (70), la lentille cylindrique (78) faisant simultanément converger la lumière lorsque l'on considère la lumière dans un état dans lequel la lumière est projetée sur un plan, perpendiculaire à l'axe du corps tournant.

2. Codeur photoélectrique rotatif selon la revendication 1, **caractérisé en ce que** le système optique télécentral est un système optique télécentral (58) des deux côtés, dans lequel des lentilles (54, 56) sont prévues respectivement du côté objet (10) du trou d'épingle (52), et du côté élément photorécepteur (60) du trou d'épingle (52).

3. Codeur photoélectrique rotatif selon la revendication 1, **caractérisé en ce que** la lumière convergente présente une aberration sphérique (S. A.).

4. Codeur photoélectrique rotatif selon la revendication 1, **caractérisé en ce qu'**un axe optique du côté de la source de lumière (70) et un axe optique du côté de l'élément photorécepteur (60) sont disposés de manière à satisfaire à une relation de réflexion régulière entre eux sur une surface du réseau optique en forme d'arc (12).

5. Codeur photoélectrique rotatif selon la revendication 1, **caractérisé en ce que** deux lentilles cylindriques (78, 79) sont utilisées en tant que lentille condensatrice (76).

6. Codeur photoélectrique rotatif selon une quelconque des revendications 1 à 5, **caractérisé en ce que** le corps tournant (10), le système optique télécentral (58) et l'élément photorécepteur (60) sont disposés de telle manière qu'un plan objet servant de surface latérale du corps tournant (10), un plan central du système optique télécentral (58), et un plan de réception de lumière de l'élément photorécepteur (60) comprennent une seule ligne d'intersection (B) afin de satisfaire à la relation de Scheimpflug.
